# EUROPEAN PATENT APPLICATION

(11) **EP 4 364 581 A1**
(43) Date of publication of application: **08.05.2024**
(21) Application number: 22833195.5
(22) Date of filing: 29.06.2022
(51) Int. Cl.: A23L 7/157, A21D 2/36, A23L 13/00

(54) **SPICE/HERB-CONTAINING BREAD CRUMBS**

(30) Priority: 29.06.2021 JP 2021107464
(71) Applicant: Nisshin Seifun Welna Inc., Tokyo 101-8441 (JP)
(72) Inventor: FUJIBE, Mitsunori, Tokyo 103-8544 (JP); TAKASU, Ryosuke, Tokyo 103-8544 (JP); NISHIDE, Tatsunori, Tokyo 103-8544 (JP); SHIGEMATSU, Toru, Tokyo 103-8544 (JP)
(74) Representative: Wächtershäuser & Hartz Patentanwaltspartnerschaft mbB
(86) International application number: PCT/JP2022/025897
(87) International publication number: WO 2023/277049

(57) **Abstract**

Spice or herb-containing bread crumbs that are baked and crushed products of a bread dough containing at least one kind of spice or herb. A bread crumb mix or a batter for fried food containing the spice or herb-containing bread crumbs. A method for producing a fried food product, the method comprising frying a food ingredient to which the spice or herb-containing bread crumbs adhere.

## Description

### Technical Field

The present invention relates to spice or herb-containing bread crumbs.

### Background Art

Bread crumbs are used in various food products as, for example, a batter for fried food, a topping for dishes such as a gratin, a filler for ground meat dishes, or a bakery raw material. The bread crumbs are often used in breaded fried food products such as cutlets and croquettes. The breaded fried food products are preferable food products having light brown appearances and savory flavors brought about by fried bread crumbs. In recent years, a large amount of the breaded fried food products has been produced in, for example, a store and sold while being stored in a heated state as necessary. However, the breaded fried food products thus prepared may have a deteriorated flavor or a darkened color tone over time. This tendency is more remarkable in a case where the breaded fried food products are stored in the heated state.

The bread crumbs are generally produced by crushing bread produced for eating or bread produced exclusively for the bread crumbs, and as necessary, performing a granulation treatment or a drying treatment. Moreover, provided are bread crumbs to which tastes and functionality are imparted by adhering, for example, seasonings to surfaces of the bread crumbs. Patent Literature 1 describes seasoned bread crumbs to be obtained by adding or mixing a mixture of seasonings, spices, and colorants dissolved or dispersed in fat and oil to bread crumbs.

Patent Literature 2 describes a bread crumb-containing seasoning composition obtained by blending a spice containing a specific moisture content of bread crumbs and a moisture absorbing spice ingredient. Patent Literature 3 describes seasoning bread crumbs obtained by allowing bread crumbs to which oil or fat adheres to adsorb one or more of seasonings and spices. Patent Literature 4 describes functional bread crumbs obtained by allowing fermented seasonings or fruit-based seasonings to adhere to surfaces of raw bread crumbs or dry bread crumbs.

### Citation List

### Patent Literature

Patent Literature 1: JP H03-259053 A
Patent Literature 2: JP H10-234330 A
Patent Literature 3: JP H11-299441 A
Patent Literature 4: JP 2011-254740 A

### Summary of Invention

### Technical Problem

In food products cooked by using bread crumbs having surfaces to which the seasonings or the spices adheres as described in Patent Literatures 1 to 4, flavors of the seasonings or the spices in the bread crumbs may be impaired. Moreover, in a case where the bread crumbs are used as the batter for fried food, fried food products obtained may have unevenness or dullness in color tone over time. In view of these circumstances, the present invention provides flavored bread crumbs that contain flavor components and can maintain flavors of the flavor components even in cooking, and can be used to produce a fried food product maintaining the flavors of the flavor components and a good appearance over time when the bread crumbs are used as the batter for fried food.

### Solution to Problem

The present inventors found that the spice or herb-containing bread crumbs produced from bread obtained by baking a bread dough containing spices or herbs are excellent in flavor due to the spices or the herbs and can maintain the flavor even after cooking. In particular, with the bread crumbs, they found also that the breaded fried food product, which maintains the flavors of the spices or the herbs and a good appearance over time even after production, can be provided.

Accordingly, the present invention provides the following.
[1] Spice or herb-containing bread crumbs that are baked and crushed products of a bread dough containing at least one kind of spice or herb.
[2] The spice or herb-containing bread crumbs according to [1], in which the bread dough contains the at least one kind of spice or herb of 0.05 to 15 mass% in total on a dry mass basis.
[3] The spice or herb-containing bread crumbs according to [1], in which the spice or the herb has a volume average diameter of 60 um to 200 µm.
[4] A bread crumb mix containing the spice or herb-containing bread crumbs according to any one of [1] to [3].
[5] A batter for fried food containing the spice or herb-containing bread crumbs according to any one of [1] to [3] .
[6] The batter for fried food according to [5], the batter for fried food being a breader for karaage containing the spice or herb-containing bread crumbs of 5 to 40 mass%.
[7] A method for producing a fried food product, the method including frying a food ingredient to which the spice or herb-containing bread crumbs according to any one of [1] to [3] adhere.
[8] The method according to [7], including frying a food ingredient to which the batter for fried food adheres, the batter for fried food containing the spice or herb-containing bread crumbs according to any one of [1] to [3].
[9] The method according to [8], in which the batter for fried food is a breader for karaage containing the spice or herb-containing bread crumbs of 5 to 40 mass%.
[10] A method for producing spice or herb-containing bread crumbs, the method including baking and crushing a bread dough containing at least one kind of spice or herb.
[11] The method according to [10], in which the bread dough contains the at least one kind of spice or herb of 0.05 to 15 mass% in total on a dry mass basis.
[12] The method according to [10], in which the spice or the herb has a volume average diameter of 60 um to 200 um.

### Advantageous Effects of Invention

The spice or herb-containing bread crumbs of the present invention are excellent in flavor due to the spices or the herbs, and can impart flavors of the spices or herbs to food products produced by using the bread crumbs for a long time. Further, the breaded fried food products produced by using the spice or herb-containing bread crumbs of the present invention can maintain a good appearance having a preferable color tone for a long time.

### Description of Embodiments

The spice or herb-containing bread crumbs of the present invention (hereinafter, also referred to as the "bread crumbs of the present invention") are baked and crushed products of the bread dough containing the at least one kind of spice or herb. The bread crumbs of the present invention can be produced by baking and crushing the bread dough containing the at least one kind of spice or herb.

The spice or the herb refers to a food material derived from, for example, a leaf, a stem, a fruit, a seed, a root, or a flower of a plant and used for a purpose of imparting a flavor (for example, a taste or a scent) to a food product. The spice or the herb contained in the bread crumbs of the present invention may be any spice or herb that can be usually used, and examples thereof include, but are not limited to, black peppers, white peppers, chili peppers, rosemary, oregano, onion, garlic, paprika, sage, lemon balm, thyme, peppermint, spearmint, lemongrass, tarragon, marjoram, caraway, dill, clove, allspice, anise, star anise, mustard, ginger, Japanese horseradish, Japanese peppers, perilla, nutmeg, mace, cardamom, cumin, coriander, fennel, turmeric, and laurel. Any one of the spices or herbs may be used singly, or any two or more of the spices and herbs may be mixed and used. As the spices or the herbs, for example, spices or herbs obtained by directly using or drying and pulverizing the leaf, the stem, the fruit, the seed, the root, and the flower of the plant can be used. Alternatively, a flavoring or flavor oil to be obtained by extracting, with any one or more of water, alcohol, oil, or the like, for example, the leaf, the stem, the fruit, the seed, the root, and the flower of the plant used directly or dried may be used in the present invention as the spices or the herbs. On the other hand, the spices or the herbs above subjected to a fermentation treatment are not preferable, since enzymes or the like derived from microorganisms impair the flavor of the bread crumbs.

Preferably, the bread crumbs of the present invention are produced from a bread dough containing at least one powder selected from the group consisting of the spices and the herbs. Preferably, the powder is a dry powder. The powder has a particle size of preferably less than 400 um, more preferably 1 um to 300 um, and still more preferably 60 um to 200 um in volume average diameter (MV) through a laser diffraction/scattering method. In a case where the particle size of the powder is too large, a patchy pattern due to the spices or the herbs may be formed on the surfaces of the bread crumbs of the present invention produced, or the food product produced by using the bread crumbs may have a slightly dull color tone.

Amounts of the spices or the herbs contained in the bread dough are preferably 0.05 to 15 mass%, more preferably 0.1 to 10 mass%, and still more preferably 0.5 to 7 mass% in total on the dry mass basis. In other words, contents of the spices or the herbs in the bread crumbs of the present invention are preferably 0.05 to 15 mass%, more preferably 0.1 to 10 mass%, and still more preferably 0.5 to 7 mass% in total on the dry mass basis. In a case where dry masses of the spices or the herbs in the bread dough are less than 0.05 mass% or more than 15 mass%, the flavors of the spices or the herbs in the bread crumbs obtained may be weak or too strong, and a flavor of the food product produced by using the bread crumbs may become insufficient. Note that, in the present description, the dry mass refers to a mass when a sample (the bread dough or the bread crumbs) is dried in a thermostatic bath at 120°C for 12 hours in accordance with an absolute dry method.

The bread crumbs of the present invention may be produced in a similar procedure to normal bread crumbs except that the bread crumbs are produced from the bread dough containing the at least one kind of spice or herb. Accordingly, bread of the spice or herb-containing bread crumbs of the present invention can be produced by preparing a bread dough from normal bread raw materials such as wheat flour, yeast, sugar, salt, and fat and oil, water, as well as the spice or the herb, fermenting the dough as necessary, and then baking the dough. In preparation of the bread dough, any of known methods such as a straight method and a sponge dough method can be used, and further, in the baking of the bread dough, any of known methods such as a roasting method and an electrode method can be used. The bread dough to be baked may be a fermented dough, a non-fermented dough, or a dough containing a leavening agent. The spice or the herb may be previously mixed with raw material flours of the bread dough, or may be separately added and mixed with the raw material flours in a process of the preparation of the bread dough. At this time, the spice or the herb may be added at an initial stage of dough preparation, or may be added at a middle stage of the dough preparation, for example, at a main kneading stage in the sponge dough method.

The spice or herb-containing bread crumbs of the present invention can be produced by crushing the bread baked and performing a granulation treatment or a drying treatment as necessary. Any known means such as PowCutter, PowCrusher, or Line Mill can be used in the crushing of the bread. The bread crumbs of the present invention may be raw bread crumbs or dry bread crumbs. For example, the bread baked is crushed directly, and granulated as necessary to obtain the raw bread crumbs. The raw bread crumbs are further dried to obtain the dry bread crumbs.

The bread crumbs of the present invention preferably have a water content of 10 to 16 mass% in a case of the dry bread crumbs, and preferably have a water content of more than 16 mass% to 36 mass% in a case of the raw bread crumbs. Note that, a water content (%) of bread crumbs in the present specification is calculated as a percentage of a mass of water in the bread crumbs, expressed by a difference between a mass of the bread crumbs before drying and the dry mass described above (a mass of the bread crumbs after being dried in the thermostatic bath at 120°C for 12 hours), to the mass of the bread crumbs before drying.

Although the bread crumbs of the present invention are not particularly limited in its size, for example, when the bread crumbs are classified by using sieves, fractions that pass through a sieve with an opening of 7 mm and remain on a sieve with an opening of 100 um may be collected as the bread crumbs of the present invention. Preferably, fractions that pass through a sieve with an opening of 5 mm and remain on a sieve with an opening of 200 um may be used as the bread crumbs of the present invention. More preferably, fractions that pass through a sieve with an opening of 3 mm and remain on a sieve with an opening of 300 um may be used as the bread crumbs of the present invention.

The spice or herb-containing bread crumbs of the present invention may be provided as a bread crumb mix containing the bread crumbs of the present invention and other raw materials. The bread crumb mix can be prepared by mixing the bread crumbs of the present invention with the other raw materials. Examples of the other raw materials include those that can be used in a conventional bread crumb mix, such as a cereal flour, a starch, a seasoning, an emulsifier, fat and oil, a pigment, and an enzyme, and the other raw materials can be appropriately selected according to an appearance and a texture of a food product to be produced by using the bread crumb mix. Preferably, the bread crumb mix is in a powder form, a particle form, or a mixture thereof. A content of the bread crumbs of the present invention in the bread crumb mix is not particularly limited, but is preferably 50 mass% or more, and more preferably 70 mass% or more in a case where the bread crumbs are used as substitutes for bread crumbs as described later.

The spice or herb-containing bread crumbs of the present invention and the bread crumb mix containing the bread crumbs can be used in place of conventional bread crumbs. For example, the bread crumbs and the bread crumb mix of the present invention can be used to produce various types of food products using the bread crumbs similar to the conventional bread crumbs (hereinafter, collectively referred to as bread crumb-containing food products). The bread crumb-containing food products may be any food product produced by using the conventional bread crumbs, and examples of the bread crumb-containing food products include food products using bread crumbs for a hamburg steak, a paste product, a bakery food product, or the like as a filler or a starch raw material for a food ingredient; food products using bread crumbs for the gratin or the like as the topping; and food products using bread crumbs for the fried food products or the like as the batter. Among these bread crumb-containing food products, the bread crumb-containing food products in which the flavor and the color tone of the bread crumbs of the present invention greatly contribute to the flavors and the appearances of the food product are preferable. For example, a fried food product having a surface covered with the batter containing the bread crumbs is suitable as a bread crumb-containing food product to be produced by using the bread crumbs of the present invention.

In a preferred embodiment, the spice or herb-containing bread crumbs of the present invention and the bread crumb mix containing the same are used as the batter for fried food. The batter for fried food containing the bread crumbs of the present invention (hereinafter, also referred to as the "batter for fried food of the present invention") may be a breader to be used in a powder form or a particle form, or may be a batter liquid mixed with a liquid such as water. Examples of types of fried foods to be produced by the batter for fried food of the present invention include the breaded fried food products having surfaces covered with the bread crumbs, karaage, and tempura. The content of the bread crumbs of the present invention contained in the batter for fried food of the present invention can be appropriately adjusted according to a type of the fried food product to be produced. For example, the bread crumbs or the bread crumb mix of the present invention can be directly used as bread crumbs for the breaded fried food products, and in this case, the content of the bread crumbs of the present invention in the batter for fried food is preferably 50 mass% or more, and more preferably 70 mass% or more. Further, for example, in a case of the breader for karaage, the content of the bread crumbs of the present invention is preferably 3 mass% or more, more preferably 5 to 40 mass%, and still more preferably 8 to 30 mass% in a total amount of the breader.

The fried food product can be produced by causing the batter for fried food of the present invention to adhere to the food ingredient and frying in oil. Examples of the food ingredient include meats such as chicken and pork, seafoods such as fishes, shrimps, squids, octopuses, and shellfishes, vegetables, mushrooms, and combinations thereof, and are not particularly limited. The food ingredient may be pre-seasoned as necessary.

The batter for fried food of the present invention can be used alone or in combination with other batters or laminated on the food ingredient. For example, in a case where the batter for fried food of the present invention is the breader, only the batter for fried food of the present invention may adhere to the food ingredient, or the batter for fried food of the present invention may adhere to the food ingredient after a dusting flour or the batter liquid adheres to the food ingredient, or the batter liquid or the breader may further adhere to the food ingredient to which the batter for fried food of the present invention adheres. Further, for example, in a case where the batter for fried food of the present invention is the batter liquid, only the batter for fried food of the present invention may directly adhere to the food ingredient, or the batter for fried food of the present invention may adhere to the food ingredient after the dusting flour adheres to the food ingredient, or the breader may adhere to the food ingredient to which the batter for fried food of the present invention adheres. From a viewpoint of the color tone of the fried food product obtained, the batter for fried food of the present invention preferably adheres to an outermost layer.

The food ingredient to which the batter adheres may be immediately fried in oil or may be preserved as a food material for the fried food product without frying in oil. For example, the food material for the fried food product can be preserved by refrigerating or freezing. The food material for the fried food product preserved can be timely fried. The frying can be performed in accordance with a conventional method. For example, the frying can be a deep-frying with a large amount of oil or a deep frying and grilling with a small amount of the oil. Examples of the fried food product to be produced by using the batter for fried food of the present invention include the karaage, the tempura, the breaded fried food products such as the cutlets and the croquettes. Preferably, the fried food product is the breaded fried food product having an outermost layer covered with the bread crumbs.

### Examples

Next, the present invention will be further described in detail with reference to examples, but the present invention is not limited to the examples below.

### Examples 1 to 5) Spice or herb-containing bread crumbs

Bread was produced from raw materials and water shown in Table 2 in accordance with steps shown in Table 1 below. The bread obtained was cooled and then crushed with a mixer for 1 minute to obtain raw bread crumbs (with a water content of 33 mass%). The raw bread crumbs were dried (dried at 150°C for 25 minutes to a water content of 13 mass%) and then sieved to collect fractions that passed through a sieve with an opening of 2.8 mm and remained on a sieve with an opening of 355 µm. Dry bread crumbs obtained were used as the spice or herb-containing bread crumbs of Examples 1 to 5.

### Reference Example) Spice or herb-free bread crumbs

Raw bread crumbs were obtained from normal bread raw materials shown in Table 2 in a similar procedure as in Example 1. The raw bread crumbs were dried and sieved in the similar procedure as in Example 1 to produce dry bread crumbs of the reference example.

### Comparative Example 1) Seasoning-containing bread crumbs

Raw bread crumbs were obtained from bread raw materials containing a powdered soy sauce shown in Table 2 in the similar manner as in Example 1. The raw bread crumbs were dried and sieved in the similar procedure as in Example 1 to produce dry bread crumbs of Comparative Example 1.

### Comparative Examples 2 to 7) Spice or herb-adhered bread crumbs

The raw bread crumbs produced in the reference example and spices or herbs were put into a container according to blending shown in Table 3, gently stirred with a rice scoop, and mixed to be uniform entirely. The mixture was dried to produce the spice or herb-adhered dry bread crumbs (with a water content of 13 mass%) of Comparative Examples 2 to 7.

### Comparative Examples 8 to 13) Spice or herb-mixed bread crumbs

The dry bread crumbs of the reference example and the spices or the herbs were put into a container according to blending shown in Table 4, gently stirred with the rice scoop, and mixed to be uniform entirely to produce the spice or herb-mixed dry bread crumbs of Comparative Examples 8 to 13.

### Test Example 1)

The bread crumbs of the examples, the comparative examples and the reference example were used to produce breaded pork cutlets that are the breaded fried food products. Soft wheat flours were dredged on entire surface of a pork loin (with a thickness of about 1.2 cm, about 100 g/1 piece) as the dusting flour, and the batter liquid (obtained by stirring 100 : 150 of the soft wheat flour and the water at a mass ratio) was allowed to adhere to the entire surface, and then the bread crumbs of the examples, the comparative examples, and the reference examples were allowed to be adhere to the entire surface to be 10 g at the dry mass per 100 g of the pork loin, respectively, to prepare breaded pork cutlet materials. The breaded pork cutlet materials were fried in oil that is heated to 170°C and has a depth of 10 cm to produce the breaded pork cutlets. The breaded pork cutlets were left at room temperature of 25°C for 10 minutes or stored in a temperature control chamber at 50°C for 6 hours, and then appearances and flavors of the cutlets were evaluated by 10 expert panelists in accordance with evaluation criteria below, and average values of evaluation scores from the 10 expert panelists were determined. Evaluation results are shown in Tables 2 to 4.

### <Evaluation criteria>

### (Appearance)

5: There is no unevenness in the color tone, and the entire surface is light brown to brown, which is extremely good.
4: There is almost no unevenness in the color tone, and the entire surface is light brown to brown, which is good.
3: The color tone is partially uneven, or the surface partially has dull color parts, which is slightly good.
2: Unevenness is partially in fried color, and the surface has the dull color parts, which is poor.
1: Unevenness is in the fried color as a whole, and the surface has the dull color parts, which is extremely poor.

### (Flavor)

5: The flavors of the spices or the herbs (or the seasonings) are sufficiently felt, which is extremely good.
4: The flavors of the spices or the herbs (or the seasoning) are felt, which is good.
3: The flavors of the spices or the herbs (or the seasoning) are slightly felt, which is slightly good.
2: The flavors of the spices or the herbs (or the seasoning) are not felt, which is poor.
1: The spices or the herbs (or the seasonings) are lack in flavor and have an oily flavor, which is extremely poor.

**[Table 1]**

| Bread making process (straight method) | |
|---|---|
| Mixing (bread production mixer) | 2 minutes at low speed → 2 minutes at medium speed → 2 minutes at high speed |
| First fermentation | 30°C, 90 minutes |
| Divided/rolled | |
| Bench time | 10 minutes |
| Second fermentation | 50°C, 50 minutes |
| Baking | Energized (200 V) 20 minutes |
| Cooling | 10°C, 18 hours |

**[Table 2]**

| Bread blending (parts by mass) | | | Example | | | | | Comparative Example | Reference Example |
|---|---|---|---|---|---|---|---|---|---|
| | | | 1 | 2 | 3 | 4 | 5 | 1 | |
| Raw material | | | | | | | | | |
| | Hard wheat flour (water content 14 mass%) | | 100 | 100 | 100 | 100 | 100 | 100 | 100 |
| | Yeast | | 1.8 | 1.8 | 1.8 | 1.8 | 1.8 | 1.8 | 1.8 |
| | Yeast food | | 0.2 | 0.2 | 0.2 | 0.2 | 0.2 | 0.2 | 0.2 |
| | Shortening | | 4 | 4 | 4 | 4 | 4 | 4 | 4 |
| | Salt | | 1 | 1 | 1 | 1 | 1 | 1 | 1 |
| | Spice or herb | | 1 | 1 | 1 | 1 | 1 | 1 | |
| | (mass% in raw material: on dry mass basis) | | (1.2) | (1.2) | (1.2) | (1.2) | (1.2) | (1.2) | (-) |
| | | | Powdered white pepper | Powdered black pepper | Powdered ginger | Powdered onion | Cumin powder | Seasoning (powdered soy sauce) | - |
| | Volume average diameter (µm) | | 75 | 175 | 133 | 121 | 150 | 45 | - |
| Water | | | 60 | 60 | 60 | 60 | 60 | 60 | 60 |
| Evaluation | | | | | | | | | |
| | 10 minutes later | Appearance | 5.0 | 4.6 | 4.7 | 4.7 | 5.0 | 2.3 | 5.0 |
| | | Flavor | 4.9 | 5.0 | 4.9 | 4.9 | 4.7 | 3.8 | 2.0 |
| | 6 hours later | Appearance | 4.6 | 4.1 | 4.2 | 4.1 | 4.3 | 1.8 | 3.0 |
| | | Flavor | 4.5 | 4.8 | 4.6 | 4.7 | 4.4 | 2.5 | 1.0 |

**[Table 3]**

| Bread crumbs blending (parts by mass) | | | | Comparative Example | | | | | |
|---|---|---|---|---|---|---|---|---|---|
| | | | | 2 | 3 | 4 | 5 | 6 | 7 |
| Raw bread crumbs (water content 33 mass%) | | | | 122 | 122 | 122 | 122 | 122 | 122 |
| Spice or herb | | | | 1 | 1 | 1 | 1 | 1 | 1 |
| (mass% in bread crumbs: on dry mass basis) | | | | (1.2) | (1.2) | (1.2) | (1.2) | (1.2) | (1.2) |
| | | | | Powdered white pepper | Powdered black pepper | Powdered ginger | Powdered onion | Cumin powder | Seasoning (powdered soy sauce) |
| | | Volume average diameter (µm) | | 75 | 175 | 133 | 121 | 150 | 45 |
| Evaluation | | | | | | | | | |
| | 10 minutes later | | Appearance | 2.9 | 2.2 | 2.7 | 2.9 | 3.1 | 2.0 |
| | | | Flavor | 3.2 | 3.3 | 3.5 | 3.5 | 2.9 | 2.3 |
| | 6 hours later | | Appearance | 2.2 | 1.5 | 1.9 | 2.2 | 2.6 | 1.2 |
| | | | Flavor | 2.1 | 2.0 | 1.7 | 1.9 | 1.3 | 1.3 |

**[Table 4]**

| Bread crumbs blending (parts by mass) | | | | Comparative Example | | | | | |
|---|---|---|---|---|---|---|---|---|---|
| | | | | 8 | 9 | 10 | 11 | 12 | 13 |
| Dry bread crumbs (water content 13 mass%) | | | | 98 | 98 | 98 | 98 | 98 | 98 |
| Spice or herb | | | | 1 | 1 | 1 | 1 | 1 | 1 |
| (mass% in bread crumbs: on dry mass basis) | | | | (1.2) | (1.2) | (1.2) | (1.2) | (1.2) | (1.2) |
| | | | | Powdered white pepper | Powdered black pepper | Powdered ginger | Powdered onion | Cumin powder | Seasoning (powdered soy sauce) |
| | | Volume average diameter (µm) | | 75 | 175 | 133 | 121 | 150 | 45 |
| Evaluation | | | | | | | | | |
| | 10 minutes later | | Appearance | 2.5 | 2.0 | 2.6 | 2.6 | 2.6 | 1.7 |
| | | | Flavor | 2.9 | 3.0 | 3.0 | 3.0 | 2.5 | 2.1 |
| | 6 hours later | | Appearance | 1.8 | 1.3 | 1.9 | 2.0 | 2.3 | 1.2 |
| | | | Flavor | 2.0 | 2.0 | 1.5 | 1.6 | 1.1 | 1.2 |

The breaded pork cutlet produced by using the spice or herb-free bread crumbs of the reference example had a very good appearance after 10 minutes, but had a surface uneven in color tone after 6 hours of storage. Further, the cutlet had a flavor equivalent to a flavor of a normal breaded pork cutlet, but was evaluated low in terms of the flavors of the spices or the herbs. In contrast, the breaded pork cutlets produced by using the spice or herb-containing bread crumbs of the examples were highly evaluated for both the appearances and the flavors not only after 10 minutes but also after the 6 hours of storage. In the bread crumbs containing the powdered soy sauce of Comparative Example 1, both the appearance and the flavor of the breaded pork cutlet were evaluated lower than those in the examples, and evaluated more lower after the 6 hours of storage. In the bread crumbs of Comparative Examples 2 to 7 having surfaces to which the spices or the herbs adhere, the appearances and flavors were not highly evaluated even after 10 minutes, and evaluated more lower after the 6 hours of storage. Such decreases in the appearances and the flavors were more remarkable in the bread crumbs of Comparative Examples 8 to 13 in which the spices or the herbs were only mixed.

### Test Example 2)

The spice or herb-containing bread crumbs were produced in a similar procedure as in Example 2 except that a blending amount of a powdered black pepper was changed as shown in Table 5 below. These bread crumbs of 20 parts by mass, the soft wheat flour of 40 parts by mass, and a potato starch of 40 parts by mass were gently stirred, and mixed to be uniform entirely to produce the breader for karaage.

A chicken leg was cut into pieces of 25 g each, and seasoned with a small amount of salt to be the food ingredients. The breader for karaage prepared above was sprinkled to adhere to the food ingredients per 3 g. The food ingredients to which the breader adheres were fried with salad oil heated to 175°C for 4 minutes to produce a fried chicken. The fried chicken produced was stored in the temperature control chamber at 50°C for 6 hours, and then an appearance and a flavor of the fried chicken were evaluated in a similar procedure as in Test Example 1. Results are shown in Table 5. Note that, as a standard, a breader obtained by mixing the powdered black pepper of 1 part by mass, the soft wheat flour of 49.5 parts by mass, and the potato starch of 49.5 parts by mass was similarly sprinkled over the chicken leg and then fried to produce the fried chicken. The fried chicken obtained as the standard was evaluated as 2 points in appearance and 3 points in flavor, and these points were used as the evaluation criteria.

**[Table 5]**

| Blender raw material (parts by mass) | | | Production example | | | | | | | Standard |
|---|---|---|---|---|---|---|---|---|---|---|
| | | | 1 | 2 | 3 | 4 | 5 | 6 | 7 | |
| Bread crumbs | | | 20 | 20 | 20 | 20 | 20 | 20 | 20 | - |
| Black pepper content in bread crumbs (mass%: on dry mass basis) | | | 0.05 | 0.1 | 0.5 | 5 | 7 | 10 | 13 | - |
| Soft wheat flour | | | 40 | 40 | 40 | 40 | 40 | 40 | 40 | 49.5 |
| Potato starch | | | 40 | 40 | 40 | 40 | 40 | 40 | 40 | 49.5 |
| Black pepper | | | - | - | - | - | - | - | - | 1 |
| Black pepper content in breader (mass%) | | | (0.01) | (0.02) | (0.1) | (1) | (1.4) | (2) | (2.6) | (1) |
| Evaluation | | | | | | | | | | |
| | 6 hours later | Appearance | 3.9 | 4.1 | 4.2 | 4.4 | 4.2 | 4.0 | 3.4 | 2.0 |
| | | Flavor | 3.6 | 4.1 | 4.3 | 4.6 | 4.7 | 4.6 | 4.2 | 3.0 |

## Claims

1. Spice or herb-containing bread crumbs that are baked and crushed products of a bread dough containing at least one kind of spice or herb.

2. The spice or herb-containing bread crumbs according to claim 1, wherein the bread dough contains the at least one kind of spice or herb of 0.05 to 15 mass% in total on a dry mass basis.

3. The spice or herb-containing bread crumbs according to claim 1, wherein the spice or the herb has a volume average diameter of 60 um to 200 µm.

4. A bread crumb mix comprising the spice or herb-containing bread crumbs according to any one of claims 1 to 3.

5. A batter for fried food comprising the spice or herb-containing bread crumbs according to any one of claims 1 to 3.

6. The batter for fried food according to claim 5, the batter for fried food being a breader for karaage containing the spice or herb-containing bread crumbs of 5 to 40 mass%.

7. A method for producing a fried food product, the method comprising frying a food ingredient to which the spice or herb-containing bread crumbs according to any one of claims 1 to 3 adhere.

8. The method according to claim 7, comprising frying a food ingredient to which the batter for fried food adheres, the batter for fried food containing the spice or herb-containing bread crumbs according to any one of claims 1 to 3.

9. The method according to claim 8, wherein the batter for fried food is a breader for karaage containing the spice or herb-containing bread crumbs of 5 to 40 mass%.

10. A method for producing spice or herb-containing bread crumbs, the method comprising baking and crushing a bread dough containing at least one kind of spice or herb.

11. The method according to claim 10, wherein the bread dough contains the at least one kind of spice or herb of 0.05 to 15 mass% in total on a dry mass basis.

12. The method according to claim 10, wherein the spice or the herb has a volume average diameter of 60 um to 200 um.
